# EUROPEAN PATENT APPLICATION

(11) **EP 2 602 380 A1**
(43) Date of publication of application: **12.06.2013**
(21) Application number: 12191789.2
(22) Date of filing: 08.11.2012
(51) Int. Cl.: D06F 39/08, D06F 35/00, D06F 39/00, D06F 33/02

(54) **Washing machine with conductivity sensor and method of controlling rinsing cycle**

(30) Priority: 08.12.2011 KR 20110131272
(71) Applicant: Samsung Electronics Co., Ltd, Gyeonggi-do 443-742 (KR)
(72) Inventor: Kang, Min Ji, Seoul (KR)
(74) Representative: Grünecker, Kinkeldey, Stockmair & Schwanhäusser

(57) **Abstract**

A washing machine (1) capable of optimizing the rinsing time and the amount of rinsing water by using a conductivity sensor (18), and a method of controlling a rinsing cycle thereof. When the amount of detergent remaining in the rinsing water is determined to be small according to the measured conductivity, the amount of rinsing water and the rinsing time are minimized, that is, the rinsing water is alternately supplied in stages of times, the conductivity of the rinsing water is measured at the stop of the supply of rinsing water, and if the measured conductivity is below a reference value, the rinsing cycle is stopped and enters to a final-spin dry cycle, so that the water and energy is saved and the rinsing is achieved with the optimum algorithm when laundry having a little contamination and a small amount of detergent is input.

## Description

### BACKGROUND

### 1. Field

The following description relates to a washing machine capable of optimizing the rinsing time and the amount of rinsing water by using a conductivity sensor, and a method of controlling the rinsing cycle thereof.

### 2. Description of the Related Art

In general, a washing machine for example, a drum-type washing machine, is an apparatus including a water tub to store water, for example, washing water or rinsing water, a cylindrical drum rotatably installed in the water tub to receive laundry, and a motor to generate a driving force to rotate the drum. As the cylindrical drum rotates, the laundry accommodated in the drum is ascended and descended, so the laundry is washed by the descending force.

The washing machine proceeds with washing by performing a series of operations including a washing cycle to separate dirt from the laundry by using water (i. e., wash water) having detergent dissolved therein, a rinsing cycle to rinsing bubbles or remaining detergent from the laundry by using water (i. e., rinsing water) that does not include detergent, and a spin-dry cycle to spin-dry the laundry at a high speed. During the rinsing cycle, water (i.e., rinsing water) is supplied, and the drum is alternately rotated during a predetermined time to force the supplied water to make contact with the laundry and then to be descended, so that the laundry is rinsed by the descending force. The rinsing cycle is performed in a predetermined number of times (or a user-selected number of times) with a predetermined rinsing time and a predetermined amount of rinsing water that are determined according to the weight (load) of the laundry.

However, in the case of laundry having a little contamination, a user may put a small amount of detergent according to the weight of the laundry. According to the conventional washing machine, the rinsing cycle is performed by a predetermined number of times with a predetermined rinsing time and a predetermined amount of rinsing water that are determined according to the weight (load) of laundry regardless of the amount of detergent that is input in the washing machine. Accordingly, even when the rinsing cycle is needed to be finished due to the depletion of detergent dissolved in the rinsing water, the rinsing cycle is continued, thereby causing water and energy to be wasted.

### SUMMARY

Therefore, it is an aspect of the present disclosure to provide a washing machine implementing an algorithm capable of measuring the conductivity of rinsing water by using a conductivity sensor and minimizing the rinsing time and the amount of rinsing water if determined that the amount of detergent dissolved in the rinsing water is small according to the measured conductivity, and a method of controlling the rinsing cycle thereof.

Additional aspects of the disclosure will be set forth in part in the description which follows and, in part, will be apparent from the description, or may be learned by practice of the disclosure.

In accordance with one aspect of the present disclosure, a method of controlling a washing machine provided with a drum, a water tub installed outside the drum to receive rinsing water and a motor to rotate the drum is as follows. Rinsing water may be supplied in a stepwise manner. A rinsing cycle may be performed by alternately rotating the drum according to a drive of the motor during the supplying of rinsing water in a stepwise manner. A conductivity of the rinsing water may be measured during the performing of the rinsing cycle. A rinsing profile of the rinsing cycle may be changed according to the measured conductivity of the rinsing water.

The supplying of rinsing water in a stepwise manner may include supplying the rinsing water for a first time that is set to measure the conductivity of the rinsing water, and supplying the rinsing water for a time that is set in stages to adjust an amount of supply of the rinsing water according to the measured conductivity.

The first time may be a time configured to supply a minimum amount of rinsing water required to measure the conductivity of the rinsing water.

The time set in stages may be a time configured to supply an amount of rinsing water suitable to adjust the amount of supply of the rinsing water.

The amount of supply of the rinsing water may be adjusted to be in proportion to the measured conductivity.

If the conductivity is large, the amount of supply of the rinsing water may be increased so that the conductivity of the rinsing water is rapidly lowered.

The rinsing cycle may perform an alternate supply of water in which the drum is alternately rotated whenever the rinsing water is supplied in a stepwise manner.

In the measuring of the conductivity of the rinsing water, the conductivity of the rinsing water may be measured when the alternate supply of water is stopped.

The rinsing profile may compare the measured conductivity of the rinsing water with a reference value, and finish the rinsing cycle that is performed through the alternate supply of water if the measured conductivity is below the reference value.

The rinsing profile may compare the measured conductivity of the rinsing water with a reference value, and control the rinsing cycle that is performed through the alternate supply of water if the measured conductivity is greater than or equal to the reference value.

In the rinsing cycle performed through the alternate supply of water, rinsing water may be supplied while adjusting the amount of supply of rinsing water according to the measured conductivity, and an alternate supply of water is performed in which the drum is alternately rotated when the rinsing water is supplied.

The amount of supply of the rinsing water may be adjusted by supplying rinsing water for the time that is set according to the measured conductivity.

If the measured conductivity is higher, the time set to supply rinsing water may be larger such that a larger amount of the rinsing water is supplied.

The amount of supply of the rinsing water may be adjusted by supplying rinsing water to a water level that is set according to the measured conductivity.

If the measured conductivity is higher, the water level set to supply rinsing water may be larger such that a larger amount of the rinsing water is supplied.

In accordance with another aspect of the present disclosure, a washing machine includes a water tub, a water supply apparatus, a conductivity sensor and a control part. The water supply apparatus may be configured to supply the water tub with rinsing water. The conductivity sensor may be configured to measure a conductivity of the rinsing water. The control part, at a rinsing cycle, may be configured to supply the water tub with the rinsing water in a stepwise manner by controlling the water supply apparatus, and may change a rinsing profile of the rinsing cycle according to the conductivity of the rinsing water that is measured by the conductivity sensor.

The water supply apparatus may supply the rinsing water in a stepwise manner according to a control of the control part. The water supply apparatus may supply the rinsing water for a first time that is set in the control part so as to measure the conductivity of the rinsing water, and supply the rinsing water for a time that is set in stages in the control part so as to adjust an amount of supply of the rinsing water according to the measured conductivity.

The control part may adjust the amount of supply of the rinsing water to be in proportion to the measured conductivity.

The control part may control, if the conductivity is large, the amount of supply of the rinsing water is increased so that the conductivity of the rinsing water is rapidly lowered.

The washing machine may further include a motor to rotate the drum. The control part may perform the rinsing cycle by alternately rotating the drum according to the driving of the motor during the alternate supply of water.

The conductivity sensor may measure a conductivity of the rinsing water that is changed through the alternate supply of water.

The control part may include the measured conductivity of the rinsing water with a reference value, and if the measured conductivity is below the reference value, change the rinsing profile to finish the rinsing cycle that is performed through the alternate supply of water.

The control part may compare the measured conductivity of the rinsing water with a reference value, and if the measured conductivity is greater than or equal to the reference value, change the rinsing profile to control the rinsing cycle that is performed through the alternate supply of water.

The control part may control the water supply apparatus to adjust an amount of supply of the rinsing water according to the measured conductivity.

The control part may adjust the amount of supply of the rinsing water during a time that is set according to the measured conductivity.

The control part, if the measured conductivity is higher, may control the time, which is set to supply the rinsing water, to be larger such that a larger amount of the rinsing water is supplied.

The control part may adjust the amount of supply of the rinsing water to a water level that is set according to the measured conductivity.

If the measured conductivity is higher, the water level may be set to be larger such that a larger amount of the rinsing water is supplied.

As described above, a washing machine and a method of controlling the rinsing cycle thereof implement an algorithm in which the conductivity of rinsing water is measured by using a conductivity sensor at a rinsing cycle, the amount of detergent dissolved in the rinsing water is determined according to the measured conductivity, and the amount of rinsing water and the rinsing time are minimized if determined that the amount of detergent is small, so that water and energy are saved. During the rinsing cycle, the algorithm for minimizing the rinsing time and the amount of rinsing water measures the conductivity of rinsing water while supplying the rinsing water in a stepwise manner, and controls the amount of rinsing water and the rinsing time. That is, the alternate supply of rinsing water is performed according to the stages of time at the supplying of the rinsing water, and the conductivity of rinsing water is measured at the stopping of the water supply, so that the rinsing cycle is stopped, and a final spin-dry cycle is performed if the measured conductivity is below a predetermined value. Accordingly, when a laundry having a little contamination is needed to be washed, and a small amount of detergent is input, the rinsing performance is obtained with the optimum algorithm without wasting the water and energy.

### BRIEF DESCRIPTION OF THE DRAWINGS

These and/or other aspects of the disclosure will become apparent and more readily appreciated from the following description of embodiments, taken in conjunction with the accompanying drawings of which:
FIG. 1 is a perspective view illustrating the external appearance of a washing machine in accordance with an embodiment of the present disclosure.
FIG. 2 is a cross-sectional view illustrating the configuration of the washing machine in accordance with an embodiment of the present disclosure.
FIG. 3 is a view illustrating an operational concept of a conductive sensor in accordance with an embodiment of the present disclosure.
FIG. 4 is a view illustrating a control block diagram of the washing machine in accordance with an embodiment of the present disclosure.
FIG. 5 is a flowchart illustrating a control operation sequence of a rinsing cycle of the washing machine in accordance with an embodiment of the present disclosure.
FIG. 6 is a flow chart illustrating an operation sequence of a stepwise rinsing profile of the washing machine in accordance with an embodiment of the present disclosure.
FIG. 7 is a flow chart illustrating a control operation sequence of a rinsing cycle of a washing machine in accordance with another embodiment of the present disclosure.

### DETAILED DESCRIPTION

Reference will now be made in detail to embodiments of the present disclosure, examples of which are illustrated in the accompanying drawings, wherein like reference numerals refer to like elements throughout.

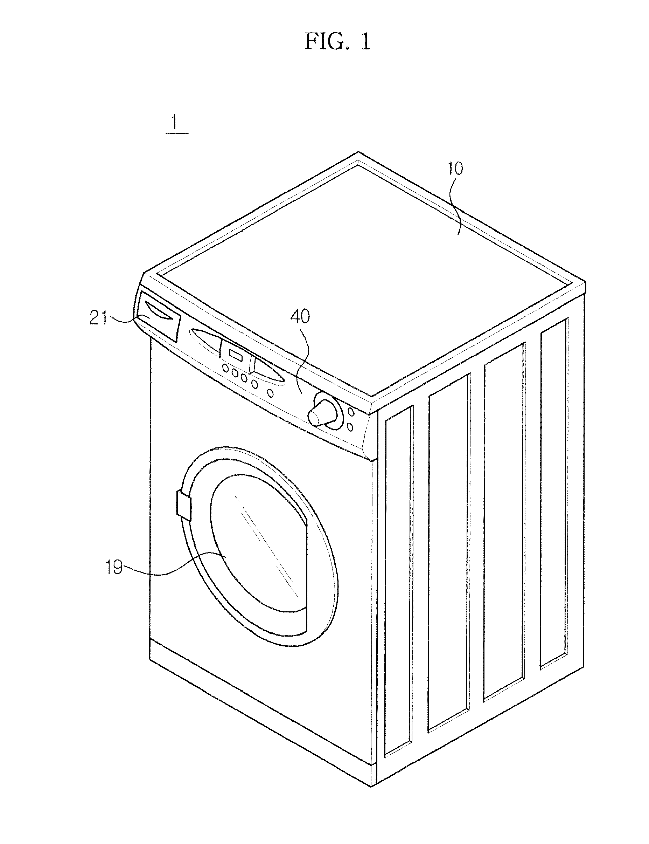

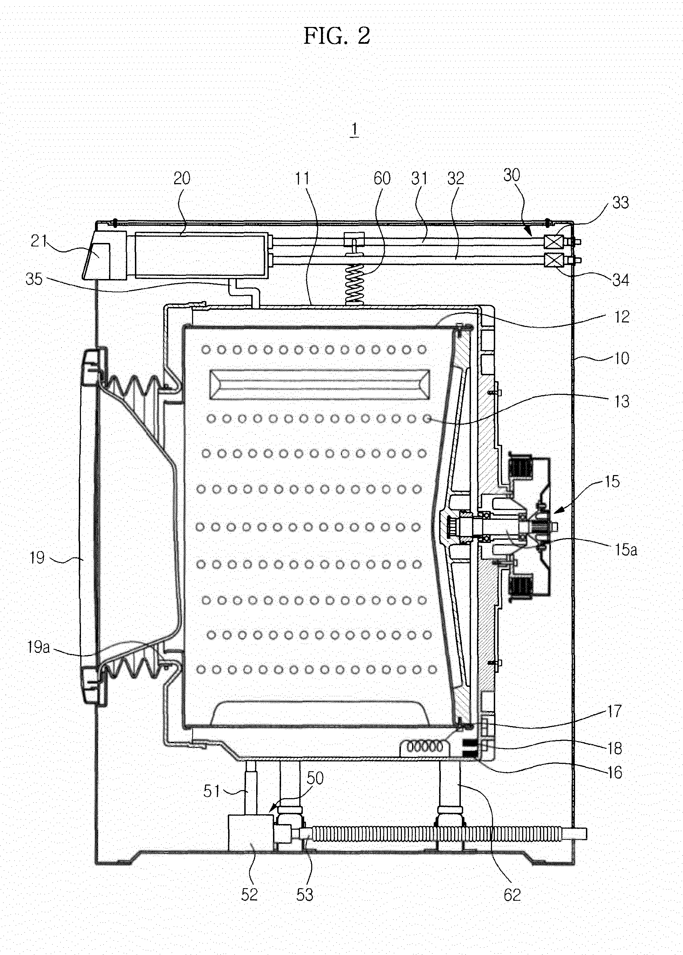

FIG. 1 is a perspective view illustrating the external appearance of a washing machine in accordance with an embodiment of the present disclosure. FIG. 2 is a cross-sectional view illustrating the configuration of the washing machine in accordance with an embodiment of the present disclosure.

Referring to FIGS. 1 and 2, a washing machine 1 in accordance with an embodiment of the present disclose includes a body 10 provided in a box shape forming an external appearance of the washing machine 1, a water tub 11 installed at an inside the body 10 and provided in a drum type to receive water (washing water or rinsing water), and a drum 12 rotatably installed inside the water tub 11 and provided with a plurality of holes 13.

A motor 15, as a driving apparatus, is installed at the outer side of a rear surface of the water tub 11 so as to rotate a rotary shaft 15a, which is connected to the drum 12 to perform a washing cycle, a rinsing cycle, and a spin-dry cycle.

In general, the motor 15 is implemented using a universal motor composed by including a field coil and an armature, or a brushless direct motor (BLDC) motor composed by including a permanent magnet and an electric magnet. However, the motor 15 in accordance with the present disclosure is not limited thereto, and other motors applicable to a small-to-medium sized drum, such as the drum 12, may be used as the motor 15.

A water level sensor 16 is installed at a lower side of the inside the water tub 11 to detect a frequency that varies with the water level to detect the amount of water (i.e., water level) of the water tub 11, a washing heater 17 to heat the water in the water tub 11, and a conductivity sensor 18 or a turbidity sensor to detect the conductivity of water, in detail, the conductivity of rinsing water in the water tub 11.

In addition, the body 10 is provided at a front surface thereof with a door 19 having an inlet 19a through which a laundry is input or withdrawn into/from the drum 12.

A detergent input apparatus 20 to supply detergent, for example, synthetic detergent or natural soup, and a water supply apparatus 30 to supply water (washing water or rinsing water) are installed on the upper side of the water tub 11.

The detergent input apparatus 20 has an interior divided into a plurality of spaces, and is installed at a front surface side of the body 10 to facilitate the input of the detergent and the fabric softener.

In addition, the water supply apparatus 30 includes a cold water supply pipe 31 and a hot water supply pipe 32 to connect between an outside water supply pipe and the detergent input apparatus 20 to supply water (washing water or rinsing water) into the water tub 11, a cold water valve 33 and a hot water valve 34 installed in the middle of the cold water supply pipe 31 and the hot water supply pipe 32, respectively, to control the supply of water, and a connection pipe 35 to connect between the detergent input apparatus 20 and the water tub 11. Through the configuration as such, the water introduced into the water tub 11 passes through the detergent input apparatus 20, so that the detergent in the detergent input apparatus 20 is supplied to the water tub 11 together with water.

In addition, a control panel 40, on which various buttons and a display part are disposed to control the washing machine 1, is provided on the upper side of the front surface of the body 10. A detergent input part 21 is provided at one side of the control panel 40 while being connected to the detergent input apparatus 20 so as to input the detergent for the washing machine 1.

The control panel has the various buttons to receive a command by a user for controlling an operation of the washing machine 1, and the display part to display an operation state of the washing machine 1 and a manipulation state of the user.

In addition, the washing machine 1 in accordance with the present disclosure is provided with a drain apparatus 50 installed thereto to drain the water in the water tub 11. The drain apparatus 50 includes a first drain pipe 51 connected to a lower portion of the water tub 11 to drain the water in the water tub 11 to an outside, a drain pump 52 installed on the first drain pipe 51, and a second drain pipe 53 connected to an exit of the drain pump 52.

In addition, the washing machine 1 in accordance with the present disclosure is provided with a suspension spring 60 to elastically support the water tub 11 at the upper side of the water tub 11 and with a damper 62 to reduce the vibration at the lower side of the water tub 11, thereby preventing the vibration from being generated during the operation of the washing machine 1.

The suspension spring 60 and the damper 62 movably support the water tub 11 at the upper side and the lower side, respectively. That is, as the drum 12 rotates, the water tub 11 is excited by a vibration excitation force generated due to the rotation of the drum 12, and is vibrated in backward/forward, left/right and upward/downward directions. Such a vibration in all directions is reduced by the suspension spring 60 and the damper 62.

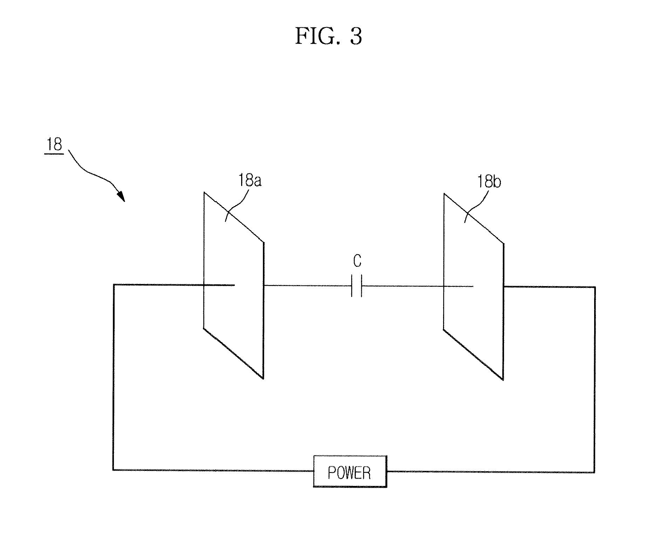

FIG. 3 is a view illustrating an operational concept of a conductive sensor in accordance with an embodiment of the present disclosure.

Referring to FIG. 3, the conductivity sensor 18 may be composed by a plurality of electrodes 18a and 18b that are disposed while being spaced apart from each other in a predetermined interval. Alternatively, the conductivity sensor 18 may be composed by one electrode while grounding an inner metal part of the washing machine 1. In this case, each of the ground and the one electrode serves as an electrode, and provides the same characteristic as in the measuring of the conductivity of water (i.e., rinsing water) through the change in a capacitance (C) between the two electrodes 18a and 18b that are spaced apart from each other in a predetermined interval.

As described above, the conductivity of water making contact with between the plurality of electrodes 18a and 18b, that is, the conductivity varying with the amount of detergent dissolved in the rinsing water is detected by using the capacitance (C), so that the degree of residual detergent in the rinsing water during the rinsing cycle is detected. In this case, if a greater amount of detergent is input in the water, the conductivity is increased according to the ionization of the detergent.

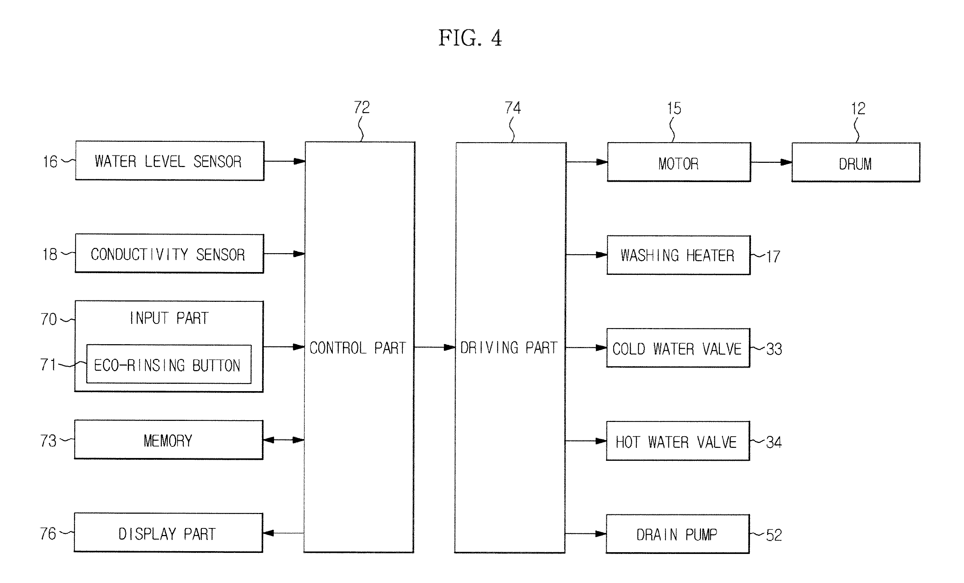

FIG. 4 is a view illustrating a control block diagram of the washing machine in accordance with an embodiment of the present disclosure.

Referring to FIG. 4, the washing machine 1 includes an input part 70, a control part 72, a memory 73, a driving part 74, and a display part 76.

The input part 70 is configured to enter commands to execute the washing cycle, the rinsing cycle and the spin-dry cycle of the washing machine 1 according to the manipulation of a user. The input part 70 includes a key, a button, a switch, and a touch pad, and may further include other apparatuses capable of generating a predetermined input data according to the pressing, the contacting, the pressurizing and the rotating manipulations.

In addition, the input part 70 is provided on the control panel 40, and includes a plurality of buttons to enter a command of a user with regard to the operation of the washing machine 1, for example, with regard to the power-on/off, reservation, the temperature of wash water, soaking, washing, rinsing, spin-drying, and the type of detergent.

In addition, the input part 70 is provided with an eco-rinsing button 71 to select a rinsing cycle to wash the laundry that has a little contamination.

The eco-rinsing button 71 is additionally provided on the control panel 40 to change an algorithm of the rinsing cycle to adapt to the amount of the detergent input when the laundry having a little contamination is needed to be washed, and a user inputs a smaller amount of detergent relative to the weight of the laundry.

The control part 72 represents a microcomputer to control the overall operation of the washing machine 1, such as the washing, the rinsing, and the spin-drying, according to the operation information that is input from the input part 70. The control part 72 sets the amount of washing water, the amount of rinsing water, the target RPM, the motor operation rate (motor on-off time), the time to wash and the time to rinse according to the weight (load) of the laundry at a selected washing course.

In addition, the control part 72, at the rinsing cycle, measures the conductivity of the rinsing water by using the conductivity sensor 18, and determines the amount of detergent dissolved in the rinsing water according to the measured conductivity. As a result of the determination, if determined that the amount of detergent dissolved in the rinsing water is small, the control part 72 implements an algorithm to minimize the time to rinse and the amount of rinsing water to save the water and the energy.

The algorithm to minimize the time to rinse and the amount of rinsing water is to control the amount of rinsing water and the time to rinse by measuring the conductivity of the rinsing water while supplying the rinsing water in a stepwise manner, other than to proceed a rinsing cycle in a predetermined number of times with a predetermined rinsing time and a predetermined amount of rinsing water that are determined according to the weight (load) of the laundry.

In detail, when the rinsing is started, rinsing water is alternately supplied in stages of time. At the completion of the alternate supply of rinsing water, the conductivity of the rinsing water is measured in a state that the supply of the rinsing water is stopped, and if the measured conductivity is below a predetermined value, the rinsing cycle is finished and the spin-dry cycle is proceeded. In this manner, the washing operation is achieved with the optimum algorithm without wasting the water and energy in a case where a small amount of detergent is input to wash the laundry having a little contamination.

As described above, when a small amount of detergent is input to wash the laundry having a little contamination, the present disclosure implements an algorithm to minimize the amount of rinsing water and the time to rinse according to the conductivity of the rinsing water without having to select an additional button. In addition, by selecting the eco-rinsing button 71 provided on the control panel 40, the algorithm to minimize the amount of rinsing water and the rinsing time may be selected for implementation.

In addition, the memory 73 may store control data to control the operation of the washing machine 1, reference data available for use during the control of the operation of the washing machine 1, operation data that is generated during the execution of a predetermined operation of the washing machine 1, setting information that is input by the input part 70 such that the washing machine 1 performs a predetermined operation, for example, setting data, the number of times by which the washing machine 1 has performed a predetermined operation, usage information including model information of the washing machine 1, and malfunction information including the cause and the location of erroneous operation of the washing machine 1.

The driving part 74 drives the motor 16, the washing heater 17, the cold water valve 33, the hot water valve 34, and the drain pump 52 related to the operation of the washing machine 1 according to a driving control signal of the control part 72.

The display part 76 is provided on the control panel 40, and displays the operation state of the washing machine 1 and the manipulation state of the user according to a display control signal of the control part 72.

Hereinafter, the washing machine in accordance with an embodiment of the present disclosure, the operation of the control method of the rinsing cycle thereof, and the operational effect thereof will be described.

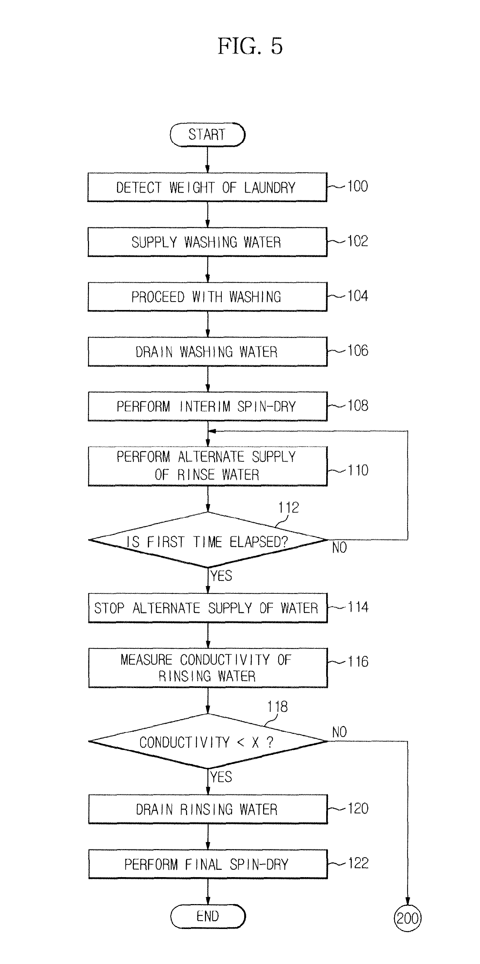

FIG. 5 is a flow chart illustrating a control operation sequence of a rinsing cycle of the washing machine in accordance with an embodiment of the present disclosure.

An embodiment of the present disclosure is described in relation to a rinsing cycle in which a rinsing profile is changed with an algorithm optimized for a case where the laundry having a little contamination is needed to be washed and a small amount of detergent is input.

Referring to FIG. 5, laundry, for example, the bed sheet, having a little contamination is input into the inside the drum 12, and a small amount of detergent is input into the detergent input apparatus 20. As the operation information related to a washing course, for example, a course for the bed sheet, and the operation of the washing machine 1 is input by a user according to the type of the laundry, the operation information selected by the user is input into the control part 72 through the input part 70.

The control part 72 starts to wash and rinse the laundry according to the operation information input from the input part 70.

The control part 72 detects the weight (load) of the laundry input into the drum 12 so as to proceed with the washing and the rinsing (100). The weight detection may be achieved by using the time taken for a motor to reach a predetermined speed or a predetermined revolution per minute (RPM) after the motor 15 performs an instantaneous acceleration. Alternatively, the weight detection may be achieved by directly or indirectly measuring the moment of inertia of the drum 12 in a state that a torque is applied to a motor in a predetermined period of time and by using Newton's second law (see Japanese unexamined patent publication No. 2002-336593, Japanese unexamined patent publication No. 2004-267334 and Japanese unexamined patent publication No. Hei 07-90077).

However, the present disclosure is not limited thereto. For example, the weight detection may be achieved through a generally known scheme using a load cell.

If the weight (load) of the laundry is detected, the control part 72 sets the amount of washing water, the amount of rinsing water, the target RPM, the motor operation rate (motor on-off time), and the washing time and the rinsing time according to the detected weight (load) of the laundry.

Thereafter, the control part 72 operates the cold water valve 33 or the hot water valve 34 to supply the water required for the washing cycle.

As the cold water valve 33 and the hot water valve 34 operate, the cold water valve 33 or the hot water valve 34 is open, and the water (washing water), which is supplied from the outside a water supply pipe after passing through the cold water supply pipe 31 or the hot water supply pipe 32, the detergent input apparatus 20, and the connection pipe 35, is supplied to the inside the water tub 11, in detail, a space between the water tub 11 and the drum 12, together with the detergent (102).

Accordingly, the control part 72 determines whether a current water level corresponds to a target washing water level, which is determined according to a designated amount of washing water, by detecting the water level of the water being supplied to the water tub 11 through the water level sensor 16, and keeps supplying water until the water level of the water being supplied to the water tub 11 reaches the target washing water level.

If the supplying of washing water to the target washing water level is completed, the control part 72 operates the motor 15 at the target RPM and at the operation rate (motor on-off time), which are set for the washing cycle, to alternately rotate the drum 12, so that the washing cycle is performed while generating a water current to transport detergent water including washing water and detergent to the laundry (104).

If the washing for a designated washing time is completed, the control part 72 stops the drum 12 and drains the detergent water (106), and proceeds with an interim spin-dry (108).

Thereafter, the control part 72 starts supplying water (rinsing water) required for the rinsing cycle to perform the rinsing cycle. The supply of the rinsing water is performed in a different manner from the supply of the washing water.

According to the present disclosure, the user inputs a small amount of detergent required to wash the laundry having a little contamination, so the amount of detergent remaining in the water tub 11, after washing is completed, is smaller than the amount of detergent that remains after the washing is performed by automatically inputting the detergent according to the weight (load) of the laundry.

Based on the point that the rinsing does not need to be performed in a predetermined number of times with a predetermined amount of rinsing water and in a predetermined rinsing time that are set according to the weight of the laundry, the present disclosure implements a rinsing profile capable of minimizing the amount of rinsing water and the rinsing time.

According to the rinsing profile to minimize the amount of rinsing water and the rinsing time, rinsing water is alternately supplied by stages of time at the start of the supply of rinsing water, and the conductivity of the rinsing water is measured at the stop of the supply of rinsing water such that the rinsing cycle is finished to enter to a final spin-dry cycle if the measured conductivity is below a reference value. Hereinafter, the rinsing profile will be described in detail.

If the supply of the rinsing water is started, the control part 72 alternately supplies rinsing water such that a minimum amount of rinsing water required to measure the conductivity of the rinsing water is supplied (110). The alternate supply of rinsing water is achieved as the control part 72 alternately rotates the drum 12 when the cold water valve 33 or the hot water valve 34 is open according to the operation of the water supply apparatus 30 and water (rinsing water) is supplied to the inside the water tub 11 to make contact with the laundry such that the rinsing is performed by a descending force of the rinsing water after making contact with the laundry.

In the alternate supply of rinsing water, a first amount of water, for example, the minimum amount of rinsing water corresponding to the weight of laundry of about 1 kg, which is required to measure the conductivity of the rinsing water, is needed to be supplied.

To this end, the control part 72 counts the number of times during which rinsing water is alternately supplied, and determines whether a predetermined first time, which is the time to supply the minimum amount of rinsing water required to measure the conductivity of the rinsing water, for example, about 10 seconds is elapsed (112).

As a result of the determination in operation 112, if determined that the first time is elapsed, the control part 72 stops the alternate supply of rinsing water (114), and measures the conductivity of the rinsing water by using the conductivity sensor 18. The measuring of the conductivity of the rinsing water is achieved at a time when the alternate supply of rinsing water is stopped, that is, at an off-time of the motor operation rate (motor on-off time), and the conductivity measured at this time is input to the control part 72 (116).

Accordingly, the control part 72 compares the measured conductivity with a reference conductivity (X; the conductivity of having almost no detergent in the rinsing water, the conductivity having a level of about 250 µs/cm, hereinafter, referred to as a reference value), and determines whether the measured conductivity is below the reference value X (118).

As a result of the determination in operation 118, if determined that the measured conductivity is below the reference value X, the control part 72 determines that almost no detergent remains in the rinsing water, and thus drains the rinsing water without proceeding with the rinsing cycle (120).

After the rinsing water is drained, the control part 72 performs a spin-dry cycle at a final spin-dry RPM, at about 1100RPM or above (122), and stops the drum 12, completing all cycles.

As described above, the conductivity of the rinsing water is measured during the rinsing cycle, and if the measured conductivity is below the reference value X, the rinsing cycle is finished, and then enters to the final spin-dry cycle, so that the rinsing operation is achieved with the optimum algorithm without wasting the water and the energy.

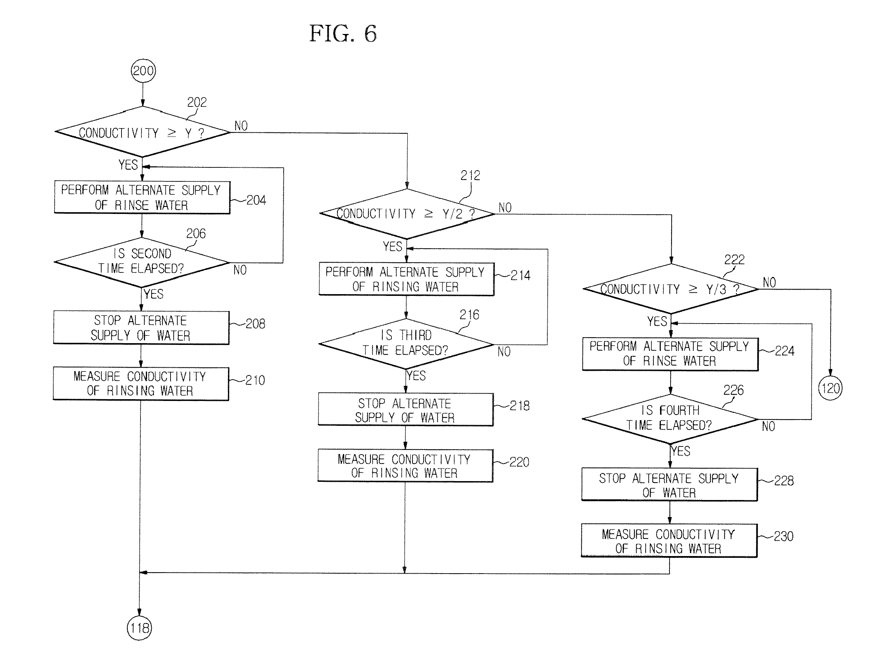

As a result of the determination in operation 118, when the measured conductivity is not below the reference value X, the control part 72 determines that detergent remains in the rinsing water, and proceeds with a rinsing profile to control the amount of rinsing water and the rinsing time while supplying the rinsing water in stages according to the measured conductivity. Since the higher the conductivity detected by the conductivity sensor 18 is, the more detergent remains in the rinsing water, the rinsing profile is to adjust the amount of rinsing water, which is to be supplied at a next stage of time, to reduce the rinsing time while saving the amount of rinsing water. The rinsing profile is described with reference to FIG. 6.

FIG. 6 is a flow chart illustrating an operation sequence of a stepwise rinsing profile of the washing machine in accordance with an embodiment of the present disclosure. FIG. 6 illustrates a rinsing profile to control the amount of rinsing water and the rinsing time while supplying rinsing water in stages of time according to the conductivity measured in FIG. 5.

In FIG. 6, the control part 72 compares the measured conductivity with a predetermined second conductivity (Y; the conductivity of having a large amount of detergent in the rinsing water, about 1000 µs/cm or above), and determines whether the measured conductivity is greater than or equal to the second conductivity Y (202).

As a result of the determination in operation 202, if the measured conductivity is greater than or equal to the second conductivity Y, the control part 72 determines that the amount of detergent remaining in the rinsing water is significantly large, and alternately supplies rinsing water by a second amount of water, which is the maximum amount of rinsing water suitable to remove the detergent remaining in the rinsing water in a rapid manner (204). The alternate supply of rinsing water is achieved as the control part 72 alternately rotates the drum 12 when the cold water valve 33 or the hot water valve 34 is open according to the operation of the water supply apparatus 30 and water (rinsing water) is supplied to the inside the water tub 11 to make contact with the laundry such that the rinsing is performed by a descending force of the rinsing water after making contact with the laundry.

In this case, the control part 72 counts the number of times during which rinsing water is alternately supplied, and determines whether a predetermined second time, which is the time to supply the maximum amount of rinsing water required to rapidly lower the conductivity of the rinsing water, for example, about 30 seconds, is elapsed (206).

As a result of the determination in operation 206, if determined that the second time is elapsed, the control part 72 stops the alternate supply of rinsing water (208), and measures the conductivity of the rinsing water by using the conductivity sensor 18. Thereafter, the measured conductivity is input to the control part 72 (210).

Accordingly, the control part 72 provides a feedback to the operation 118 to determine whether the measured conductivity is dropped below the reference value X after the rinsing operation is performed through the stepwise supply of rinsing water in an alternating manner.

Meanwhile, as a result of the determination in operation 202, if the measured conductivity is not greater than or equal to the second conductivity Y, the control part 72 compares the measured conductivity with a third conductivity (Y/2; the conductivity of having detergent in the rinsing water to some extent, about 500 µs/cm or above), and determines whether the measured conductivity is greater than or equal to the third conductivity Y/2 (212).

As a result of the determination in operation 212, if the measured conductivity is greater than or equal to the third conductivity Y/2, the control part 72 determines that detergent remains in the rinsing water to some extent, and alternately supplies rinsing water to supply rinsing water by a third amount of rinsing water, which is the amount of rinsing water suitable to remove the detergent remaining in the rinsing water (214). The alternate supply of rinsing water is achieved as the control part 72 alternately rotates the drum 12 when the cold water valve 33 or the hot water valve 34 is open according to the operation of the water supply apparatus 30 and water (rinsing water) is supplied to the inside the water tub 11 to make contact with the laundry such that the rinsing is performed by a descending force of the rinsing water after making contact with the laundry.

In this case, the control part 72 counts the number of times during which rinsing water is alternately supplied, and determines whether a predetermined third time, which is the time to supply the amount of rinsing water required to lower the conductivity of the rinsing water, for example, about 15 seconds, is elapsed (216).

As a result of the determination in operation 216, if determined that the third time is elapsed, the control part 72 stops the alternate supply of rinsing water (218), and measures the conductivity of the rinsing water by using the conductivity sensor 18. Thereafter, the measured conductivity is input to the control part 72 (220).

Accordingly, the control part 72 provides a feedback to the operation 118 to determine whether the measured conductivity is dropped below the reference value X after the rinsing operation is performed through the stepwise supply of rinsing water in an alternate manner.

Meanwhile, as a result of the determination in operation 212, if the measured conductivity is not greater than or equal to the third conductivity Y/2, the control part 72 compares the measured conductivity with a fourth conductivity (Y/3; the conductivity of having detergent in the rinsing water to a small extent, about 250 µs/cm or above), and determines whether the measured conductivity is greater than or equal to the fourth conductivity Y/3 (222).

As a result of the determination in operation 222, if the measured conductivity is greater than or equal to the fourth conductivity Y/3, the control part 72 determines that detergent remains in the rinsing water to a small extent, and alternately supplies rinsing water to supply rinsing water by a fourth amount of rinsing water, which is the amount of rinsing water suitable to remove the detergent remaining in the rinsing water (224). The alternate supply of rinsing water is achieved as the control part 72 alternately rotates the drum 12 when the cold water valve 33 or the hot water valve 34 is open according to the operation of the water supply apparatus 30 and water (rinsing water) is supplied to the inside the water tub 11 to make contact with the laundry such that the rinsing is performed by a descending force of the rinsing water after making contact with the laundry.

In this case, the control part 72 counts the number of times during which rinsing water is alternately supplied, and determines whether a predetermined fourth time, which is the time to supply the amount of rinsing water required to lower the conductivity of the rinsing water, for example, about 7.5 seconds, is elapsed (226).

As a result of the determination in operation 226, if determined that the fourth time is elapsed, the control part 72 stops the alternate supply of rinsing water (228), and measures the conductivity of the rinsing water by using the conductivity sensor 18. Thereafter, the measured conductivity is input into the control part 72 (230).

Accordingly, the control part 72 provides a feedback to the operation 118 to determine whether the measured conductivity is dropped below the reference value X after the rinsing operation is performed through the stepwise supply of rinsing water in an alternate manner.

Meanwhile, as a result of the determination in operation 222, if the measured conductivity is not greater than or equal to the fourth conductivity Y/3, the control part 72 determines that almost no detergent remains in the rinsing water. Accordingly, the control part 72 stops the rinsing cycle and provides a feedback to the operation 120 to drain the rinsing water.

In addition, the conventional rinsing cycle sets the number of times, by which the rinsing is performed, typically, two or three times, according to the weight (load) of a laundry, and proceeds with the rinsing operation at the set number of times even if the rinsing water has a significantly small detergent that does not require the set number of times of rinsing, so that the water and energy are wasted. However, the rinsing cycle profile in accordance with the present disclosure does not unconditionally proceeds with the rinsing cycle up to the set number of times. That is, according to the rinsing profile of the present disclosure, if the rinsing water supplied in stages of time is measured to be below a reference value at the first time of the rinsing cycle is performed, the rinsing cycle is stopped at the first time without proceeding to the second time of the rinsing cycle.

Meanwhile, an embodiment of the present disclosure is implemented as adjusting the supply of rinsing water by counting the number of times during which the rinsing water is alternately supplied, but the present disclosure is not limited thereto. The adjusting of the supply of rinsing water may be achieved in a manner to supply a designated water level of the rinsing water using the water sensor 16 for the same purpose and effect as the adjusting of supply of rinsing water by counting the number of times.

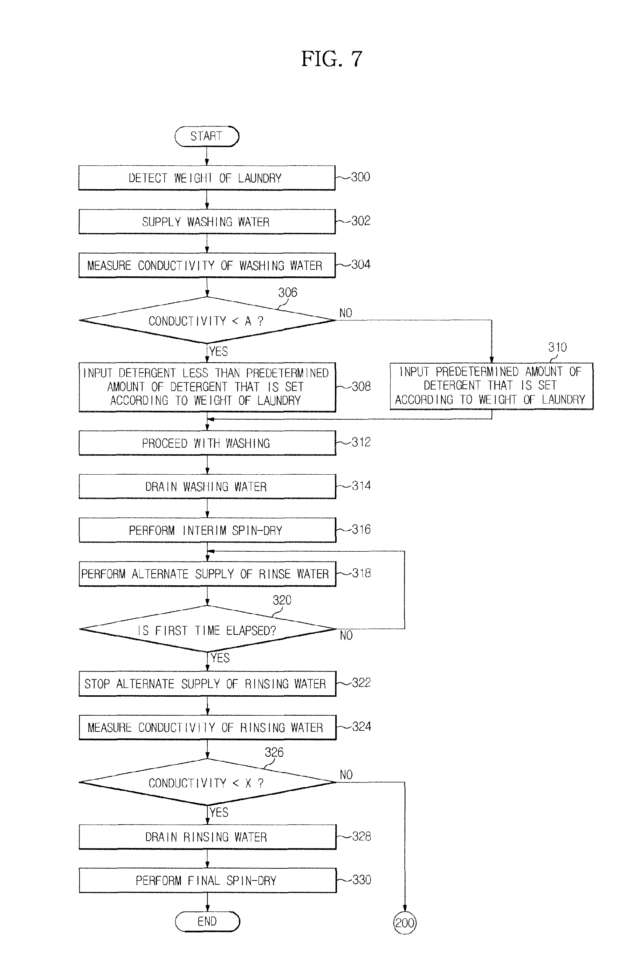

In addition, the above description has been made based on the assumption that the laundry has a little contamination and a user manually inputs a small amount of detergent as an example, but the present disclosure is not limited thereto. Another example of the present disclosure may be achieved by determining the extent of contamination of laundry using the conductivity sensor 18 and automatically inputting a small amount of detergent for the same purpose and effect as the above example, which will be described with reference to FIG. 7.

FIG. 7 is a flow chart illustrating a control operation sequence of a rinsing cycle of the washing machine in accordance with another embodiment of the present disclosure.

The following description will be made in relation to a rinsing cycle when the laundry has a little contamination, in which a small amount of detergent is automatically input through the detergent input apparatus 20 other than the manual input of detergent by a user, and the rinsing profile is changed with an optimized algorithm. In this case, the detergent input apparatus 20 has a predetermined amount of detergent input thereto in advance.

Referring to FIG. 7, if the user inputs the laundry having a little contamination, for example, bed sheet, to the inside the drum 12, and inputs the operation information, which is related to a washing course, for example, a course to wash the bed sheet and the operation of the washing machine 1, according to the type of the laundry, the operation information input by the user is input into the control part 72 through the input part 70.

Accordingly, the control part 72 starts proceeding with the washing and rinsing according to the operation information input from the input part 70.

The control part 72 detects the weight (load) of laundry that is input to the inside the drum 12 to proceed with the washing and rinsing (300).

If the weight (load) is detected, the control part 72 sets the amount of washing water, the amount of rinsing water, the target RPM, the motor operation rate (motor on-off time), and the washing time and the rinsing time.

Thereafter, the control part 72 operates the cold water valve 33 or the hot water valve 34 to supply the water (washing water) required for the washing cycle.

If the cold water valve 33 or the hot water valve 34 operates, the cold water valve 33 or the hot water valve 34 is open, so that water (washing water), which is supplied through the outside water supply pipe after passing through the cold water pipe 31 or the hot water pipe 32, the detergent input apparatus 20, and the connection pipe 35, is supplied to the inside the water tub 11 together with detergent (302).

Accordingly, the control part 72 detects a water level of the water being supplied to the water tub 11 through the water level sensor 16 and determines whether the water level corresponds to a target washing water level that is set by a designated amount of washing water, and keeps supplying until the water level of the water being supplied to the water tub 11 reaches the target washing water level.

If the supplying of washing water up to the target washing water level is completed, the conductivity of the washing water is measured using the conductivity sensor 18, and the measured conductivity is input into the control part 72 (304).

Accordingly, the control part 72 compares the measured conductivity with a reference conductivity (A: the conductivity to detect a turbidity of the washing water according to the extent of contamination of the laundry, hereafter, referred to as a detergent input value), and determines whether the measured conductivity is below the detergent input value A (306).

As a result of the determination in operation 306, if the measured conductivity is below the detergent input value A, the control part 72 determines that the extent of contamination of laundry is small, and automatically inputs detergent that is less than a predetermined amount of detergent, which is set according to the weight of the laundry, to the detergent input apparatus 20 (308). The amount of detergent being input to the detergent input apparatus 20, which is less than the predetermined amount of detergent, is adjusted according to the measured conductivity.

Meanwhile, as a result of the determination in operation 306, if the measured conductivity is not below the detergent input value A, the control part 72 determines that the extent of contamination of laundry is not small, and thus automatically inputs the predetermined amount of detergent that is set according to the weight of the laundry to the detergent input apparatus 20 (310).

Thereafter, the control part 72 operates the motor 15 at the predetermined target RPM and the predetermined operation rate (motor on-off time) that are set for the washing cycle to alternately rotate the drum 12 such that a water current to transfer the detergent water including washing water and detergent is generated, proceeding with the washing cycle (312).

If the washing for the set washing time is completed, the control part 72 stops the drum 12, drains the detergent water including washing water and detergent (314), and proceeds with an interim spin-dry (316).

Subsequently, the control part 72 starts supplying water (rinsing water) required for the rinsing cycle. The supply of rinsing water is proceeded differently from the supply of washing water.

Since a small amount of detergent to wash the laundry having a little contamination has been input through the detergent input apparatus 20, the amount of detergent remaining in the water tub 11 after the washing operation is smaller than that remains when automatically inputting the detergent according to the weight (load) of the laundry.

When the supply of rinsing water is started, rinsing water is alternately supplied to supply the minimum amount of rinsing water required to measure the conductivity of the rinsing water (318). The alternate supply of rinsing water is achieved as the control part 72 alternately rotates the drum 12 when the cold water valve 33 or the hot water valve 34 is open according to the operation of the water supply apparatus 30 and water (rinsing water) is supplied to the inside the water tub 11 to make contact with the laundry such that the rinsing is performed by a descending force of the rinsing water after making contact with the laundry.

In the alternate supply of rinsing water, a first amount of water, for example, the minimum amount of rinsing water corresponding to the weight of laundry of about 1 kg, which is required to measure the conductivity of the rinsing water, is needed to be supplied.

To this end, the control part 72 counts the number of times during which rinsing water is alternately supplied, and determines whether a predetermined first time, which is the time to supply the minimum amount of rinsing water required to measure the conductivity of the rinsing water, for example, about 10 seconds, is elapsed (320).

As a result of the determination in operation 320, if determined that the first time is elapsed, the control part 72 stops the alternate supply of rinsing water (322), and measures the conductivity of the rinsing water by using the conductivity sensor 18. The measuring of the conductivity of the rinsing water is achieved at a time when the alternate supply of rinsing water is stopped, that is, at an off-time of the motor operation rate (motor on-off time), and the conductivity measured at this time is input into the control part 72 (324).

Accordingly, the control part 72 compares the measured conductivity with a reference conductivity (X; the conductivity of having almost no detergent in the rinsing water, the conductivity having a level of about 250 µs/cm, hereinafter, referred to as a reference value), and determines whether the measured conductivity is below the reference value X (326).

As a result of the determination in operation 326, if determined that the measured conductivity is below the reference value X, the control part 72 determines that almost no detergent remains in the rinsing water, and thus drains the rinsing water without proceeding with the rinsing cycle (328).

After the rinsing water is drained, the control part 72 performs a spin-dry cycle at a predetermined final spin-dry RPM, about 1100RPM or above (330), and stops the drum 12, completing all cycles.

As described above, the conductivity of the rinsing water is measured during the rinsing cycle, and if the measured conductivity is below the reference value X, the rinsing cycle is finished, and then enters to the final spin-dry cycle, so that the rinsing operation is achieved with the optimum algorithm without wasting the water and the energy.

As a result of the determination in operation 326, the measured conductivity is not below the reference value X, the control part 72 determines that detergent remains in the rinsing water, and proceeds with the operation 200 in FIG. 6, for a rinsing profile to control the amount of rinsing water and the rinsing time while supplying the rinsing water in stages according to the measured conductivity. Since the higher the conductivity detected by the conductivity sensor 18 is, the more detergent remains in the rinsing water, the rinsing profile is to adjust the amount of rinsing water, which is to be supplied at a next stage of time, to reduce the rinsing time while saving the amount of rinsing water.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A method of controlling a washing machine provided with a drum, a water tub installed outside the drum to receive rinsing water and a motor to rotate the drum, the method comprising:
supplying rinsing water in a stepwise manner;
performing a rinsing cycle by alternately rotating the drum according to a drive of the motor during the supplying of rinsing water in a stepwise manner;
measuring a conductivity of the rinsing water during the performing of the rinsing cycle; and
changing a rinsing profile of the rinsing cycle according to the measured conductivity of the rinsing water.

2. The method of claim 1, wherein the supplying of rinsing water in a stepwise manner comprises:
supplying the rinsing water for a first time that is set to measure the conductivity of the rinsing water; and
supplying the rinsing water for a time that is set in stages to adjust an amount of supply of the rinsing water according to the measured conductivity.

3. The method of claim 2, wherein the first time is a time configured to supply a minimum amount of rinsing water required to measure the conductivity of the rinsing water.

4. The method of claim 2, wherein the time set in stages is a time configured to supply an amount of rinsing water suitable to adjust the amount of supply of the rinsing water.

5. The method of claim 2, wherein the amount of supply of the rinsing water is adjusted to be in proportion to the measured conductivity.

6. The method of claim 5, wherein if the conductivity is large, the amount of supply of the rinsing water is increased so that the conductivity of the rinsing water is rapidly lowered.

7. The method of claim 1, wherein the rinsing cycle performs an alternate supply of water in which the drum is alternately rotated whenever the rinsing water is supplied in a stepwise manner.

8. The method of claim 7, wherein in the measuring of the conductivity of the rinsing water, the conductivity of the rinsing water is measured when the alternate supply of water is stopped.

9. The method of claim 8, wherein the rinsing profile compares the measured conductivity of the rinsing water with a reference value, and finishes the rinsing cycle that is performed through the alternate supply of water if the measured conductivity is below the reference value.

10. The method of claim 8, wherein the rinsing profile compares the measured conductivity of the rinsing water with a reference value, and controls the rinsing cycle that is performed through the alternate supply of water if the measured conductivity is greater than or equal to the reference value.

11. The method of claim 10, wherein in the rinsing cycle performed through the alternate supply of water,
rinsing water is supplied while adjusting the amount of supply of rinsing water according to the measured conductivity, and
an alternate supply of water is performed in which the drum is alternately rotated when the rinsing water is supplied.

12. The method of claim 11, wherein the amount of supply of the rinsing water is adjusted by supplying rinsing water for the time that is set according to the measured conductivity.

13. The method of claim 11, wherein the amount of supply of the rinsing water is adjusted by supplying rinsing water to a water level that is set according to the measured conductivity.

14. A washing machine comprising:
a water tub;
a water supply apparatus configured to supply the water tub with rinsing water;
a conductivity sensor configured to measure a conductivity of the rinsing water; and
a control part, at a rinsing cycle, configured to supply the water tub with the rinsing water in a stepwise manner by controlling the water supply apparatus, and to change a rinsing profile of the rinsing cycle according to the conductivity of the rinsing water that is measured by the conductivity sensor.

15. The washing machine of claim 14, wherein the water supply apparatus supplies the rinsing water in a stepwise manner according to a control of the control part,
wherein the water supply apparatus supplies the rinsing water for a first time that is set in the control part so as to measure the conductivity of the rinsing water, and supplies the rinsing water for a time that is set in stages in the control part so as to adjust an amount of supply of the rinsing water according to the measured conductivity.
